# EUROPÄISCHE PATENTSCHRIFT

(11) **EP 1 951 392 B1**
(45) Veröffentlichungstag und Bekanntmachung des Hinweises auf die Patenterteilung: **13.01.2016**
(21) Anmeldenummer: 06829950.2
(22) Anmeldetag: 08.11.2006
(51) Int. Cl.: B01D 3/06, B01D 19/00, B29B 7/84, C08F 6/00, C08L 25/08, F28F 13/08, F28D 7/16

(54) **ROHRBÜNDELWÄRMEÜBERTRAGER UND VERFAHREN ZUR ENTFERNUNG VON GELÖSTEN STOFFEN AUS EINER POLYMERLÖSUNG**
TUBE BUNDLE HEAT EXCHANGER AND METHOD FOR REMOVING DISSOLVED SUBSTANCES FROM A POLYMER SOLUTION
ECHANGEUR DE CHALEUR À FAISCEAU TUBULAIRE ET PROCÉDÉ D'ÉLIMINATION DE MATÉRIAUX DISSOUS À PARTIR D'UNE SOLUTION POLYMÈRE

(30) Priorität: 14.11.2005 DE 102005054151
(43) Veröffentlichungstag der Anmeldung: 06.08.2008
(73) Patentinhaber: Styrolution Europe GmbH, 60325 Frankfurt am Main (DE)
(72) Erfinder: GÜNTHERBERG, Norbert, 67346 Speyer (DE); HOFMANN, Jürgen, 67069 Ludwigshafen (DE); WASSMER, Karl-Heinz, 67112 Mutterstadt (DE); LOTH, Wolfgang, 67098 Bad Dürkheim (DE); SCHIERHOLZ, Jens-Uwe, 64625 Bensheim (DE); SCHMAUS, Paulus, 67071 Ludwigshafen (DE); MOURS, Marian, 67256 Weisenheim (DE); SCHADE, Christian, 67063 Ludwigshafen (DE); ITTEMANN, Peter, 68623 Lampertheim (DE); HEINEN, Hartmut, 67067 Ludwigshafen (DE); CZAUDERNA, Bernhard, 69463 Hirschberg (DE); SAUER, Michael, 68766 Hockenheim (DE); BARDON, Rainer, 67125 Dannstadt-Schauernheim (DE); KRÜGER, Marco, 68219 Mannheim (DE)
(74) Vertreter: Jacobi, Markus Alexander
(86) Internationale Anmeldenummer: PCT/EP2006/068205
(87) Internationale Veröffentlichungsnummer: WO 2007/054504

(56) Entgegenhaltungen:
- EP-A1- 0 939 287
- EP-A1- 1 086 958
- WO-A1-02/00740
- DE-A1- 3 045 731
- US-A- 5 785 808
- US-A1- 2003 007 419
- US-B1- 6 505 648
- "DIN EN 10220 Nahtlose und geschweißte Rohre: Allgemeine Tabellen für Maße und längenbezogene Masse", March 2003 (2003-03), Deutsches Institut für Normung e.V., XP001525500, * the whole document *

## Beschreibung

Die Erfindung betrifft einen Rohrbündelwärmeübertrager und ein Verfahren zur Entfernung von gelösten Stoffen aus einer Polymerlösung unter Verwendung des Rohrbündelwärmeübertragers.

Thermoplastische Polymere, wie Styrol, Styrol-Acrylnitril-Copolymere (SAN) oder (HIPS) werden häufig nach dem Lösungs-Polymerisationsverfahren hergestellt. Um die polymeren Wertstoffe zu gewinnen besteht ein wesentlicher Verfahrensschritt in der Entfernung von gelösten Stoffen aus der nach der Polymerisation erhaltenen Polymerlösung, insbesondere von nicht umgesetzten Monomeranteilen, niedermolekularen Reaktionsprodukten (Oligomeren), Zersetzungsprodukten, Hilfsstoffen und vor allem Lösungsmitteln.

Hierfür werden häufig Entgasungsverfahren verwendet, wonach die gelösten Stoffe unter Druckabsenkung und gegebenenfalls Wärmezuführung in den gasförmigen Aggregatzustand übergeführt und in gasförmigem Zustand von der flüssig verbleibenden Polymerschmelze abgetrennt werden.

Für die apparative Durchführung der Entgasung sind eine Vielzahl von Verfahrensvarianten bekannt, wobei insbesondere im nieder- und mittelviskosen Bereich zu entgasender Polymerlösungen sich die Entgasung in Rohrbündelwärmeübertragern besonders bewährt hat. Hierbei handelt es sich um relativ wenig störanfällige Apparate, ohne mechanisch bewegte Teile.

Zu Entgasung einsetzbare Rohrbündelwärmeübertrager bestehen, wie auch herkömmliche Rohrbündelapparate, aus einem Bündel von parallel zueinander und vertikal angeordneten Rohren, die an beiden Enden jeweils in einem Rohrboden befestigt sind und Einrichtungen aufweisen für die Zuführung eines ersten Mediums, beispielsweise der zu entgasenden Polymerlösung, durch die Rohre, insbesondere jeweils eine Haube mit Zu- bzw. Abführstutzen an jedem Ende des Apparates sowie mit Einrichtungen für die Zu- bzw. Abführung, beispielsweise Ringleitungen, für ein zweites Medium, insbesondere einen Wärmeträger, durch den Raum zwischen den Rohren.

Insbesondere bei großen Apparaten, mit einer Vielzahl von Rohren, ist es für eine gleichmäßige Produktqualität erforderlich, das zu behandelnde Medium, beispielsweise die zu entgasende Polymerlösung, gleichmäßig auf sämtliche Rohre zu verteilen.

Hierfür ist es beispielsweise aus DE-A 36 28 994 bekannt, den Rohrbündelapparat mit Drossel- und Verteileinrichtungen in den Rohreinläufen zu versehen.

Die WO-A 02/00740 beschreibt einen weiteren Rohrbündelwärmeübertrager zur Entgasung von Polymerlösungen in einer ersten Entgasungsstufe, wobei zur gleichmäßigen Verteilung des in das Rohrbündel eintretenden Stoffstromes in die einzelnen Rohre eine Verteilerplatte (Lochplatte) vorgesehen sein kann, die in dem Raum vor den Rohren einen erhöhten Druckverlust bewirkt. Beschrieben wird ein Druck im Entgasungsbereich zwischen 20 und 100 mbar und eine Temperatur der Mantelheizung von 190 bis 240°C. Das Verfahren soll insbesondere so betrieben werden, dass innerhalb der Rohre keine Blenden oder Verengungen vorgesehen sind, und dass somit der Druckverlust der Strömung in den Rohren gering ist, und zwar kleiner als 10 bar absolut, bevorzugt kleiner als 5 bar absolut.

Als Ergebnis der ersten Verfahrensstufe soll ein Polymer mit einem Restmonomergehalt von 1.000 bis 2.000 ppm erhältlich sein.

Dieses wird nach dem Verfahren der WO-A 02/00740 in einer zweiten Entgasungsstufe in einem Strangentgaser, weiter auf niedrigere Monomer-Restgehalte gereinigt.

Das beschriebene Verfahren soll in der Weise durchgeführt werden, dass das Eindampfen der Lösung bereits kurz nach Eintritt der Lösung in die Rohre unter Bildung eines voluminösen Schaumes, das heißt eines zweiphasigen Mediums, verdampft. Die Zweiphasigkeit innerhalb der Rohre soll einen positiven Einfluss auf Wärmeübergang, Verweilzeit und Produkttemperatur (Siedekühlung) aufweisen, und dadurch eine schonende Eindampfung, das heißt mit geringer Temperaturbelastung und kurzen Verweilzeiten, gewährleisten.

US 5,785,808 beschreibt die thermische Behandlung einer Polymermischung zur Entfernung von flüchtigen Komponenten. US 2003/0007419 betrifft eine Umlenkvorrichtung für einen Wärmetauscher, die die Form einer Scheibe aufweist. EP-A 0939287 beschreibt ein mehrstufiges Verfahren zur Entfernung von flüchtigen Komponenten, bei dem eine Zusammensetzung unter Druck über eine Trockenkammer geführt wird. Aus EP-A 1086958 ist ein Verfahren zur Entfernung von Monomeren aus einer Polymerlösung bekannt, bei dem ein Schäumungsmittel zugesetzt wird.

Es war demgegenüber Aufgabe der Erfindung, ein Verfahren zur Entgasung von gelösten Stoffen in einem Rohrbündelwärmeübertrager zur Verfügung zu stellen, wonach bei einfachem Durchgang, in einer einzigen Entgasungsstufe, eine verbesserte Produktqualität, insbesondere niedrigere Restgehalte an gelösten Stoffen erreichbar sind. Dieses Verfahren wird in den Ansprüchen näher beschrieben.

Die apparative Aufgabe wird gelöst durch einen Rohrbündelwärmeübertrager zur Entfernung von gelösten Stoffen aus einer Polymerlösung durch Entgasung, mit einem Bündel von parallel zueinander und vertikal angeordneten Rohren, die an beiden Enden jeweils in einem Rohrboden befestigt sind sowie mit einem Entgasungsbereich unterhalb des unteren Rohrbodens, mit einem Einbau in jedem Rohr, der den freien Durchtrittsquerschnitt durch das Rohr verengt und wobei den Rohren die Polymerlösung in einphasigem flüssigem Zustand zugeführt wird, sowie mit einem Mantelraum um die Rohre, der von einem Wärmeträger durchströmt wird, wobei die Entgasung durch einen Druckabfall zwischen dem Eingangsdruck der Polymerlösung in dem Rohrbündelwärmeübertrager und dem Entgasungsbereich erfolgt, der dadurch gekennzeichnet ist, dass jeder Einbau dergestalt ausgebildet ist, dass er einen Drucksprung zwischen dem Eingangsdruck und dem Druck im Entgasungsbereich erzeugt, durch den ein vorgegebener niedriger Restgehalt an gelösten Stoffen im entgasten Polymer erreicht wird.

In einer bevorzugten Variante ist der Einbau dergestalt ausgebildet, dass er zusätzlich gewährleistet, dass der Wärmeeintrag seitens des Wärmeträgers in die einphasige flüssige Polymerlösung erfolgt.

Es wurde gefunden, dass die Einbauten in den Rohren eines Rohrbündelwärmeübertragers zur Entgasung von Polymerlösungen nicht nur der Gleichverteilung der Polymerlösung auf die Rohre dienen und einen Druckabfall zwischen dem Eingangsdruck der Polymerlösung und dem Druck im Entgasungsbereich bewirken müssen, sondern dass es für die Entgasungsleistung wesentlich ist, dass der Druckabfall als Drucksprung erfolgt, das heißt dass die Geometrie die Einbauten bzw. die durch die Einbauten bewirkte Querschnittsverengung des Strömungsweges der Polymerlösung durch die Rohre in der Weise ausgelegt ist, dass der Druck um mehrere Größenordnungen auf einer kurzen Strecke sprungartig abfällt.

Insbesondere soll der Einbau einen Drucksprung von mindestens 10 bar/cm bewirken.

Die entsprechende Verengung des freien Durchtrittsquerschnitts durch die Einbauten in den Rohren erfolgt auf weniger als 5 % , bevorzugt weniger als 2 %, weiter bevorzugt weniger als 1 %, jeweils bezogen auf den freien Querschnitt des Rohres ohne Einbau.

Je nach zu lösender Entgasungsaufgabe, das heißt insbesondere je nach der chemischen Natur der Polymerlösung und den vorgegebenen niedrigen Restgehalten an gelösten Stoffen im entgasten Polymer am Ende eines einzigen Durchgangs durch den Rohrbündelwärmeübertrager kann es ausreichend sein, die Aufgabe dadurch zu lösen, dass die Einbauten in der Weise ausgestaltet sind, dass sie den oben beschriebenen Drucksprung bewirken. Dies ist insbesondere dann der Fall, wenn die zu entgasende Polymerlösung bereits beim Eintritt in den Rohrbündelwärmeübertrager einen ausreichenden Energieinhalt hat, damit die Verdampfung der gelösten Stoffe möglich ist. Insbesondere kann dies beispielsweise bei Styrol-Acrylnitril-Copolymer-Lösungen der Fall sein.

In dieser Ausführungsvariante ist es möglich, die Einbauten im Bereich des oberen Rohrbodens anzuordnen und in Form von Stopfen auszubilden, die das Rohr bevorzugt bis auf eine Zentralbohrung für den Durchtritt der Polymerlösung verschließen.

Anstelle einer einzigen Zentralbohrung ist es jedoch auch möglich, zwei oder mehrere Bohrungen vorzusehen, die beispielsweise paarweise, in Dreieck- oder Quadratform oder in Form der Augen eines Spielwürfels angeordnet sein können. Für die Auslegung der Bohrungen sind die mechanische Festigkeit des Stopfens, der gewünschte Durchsatz der Polymerlösung, der gewünschte Drucksprung über den Stopfen, die Stoffeigenschaften der Polymerlösung und gegebenenfalls die gewünschten Strömungsverhältnisse zu berücksichtigen.

Die Bohrungen können in Richtung der Längsachse des Stopfens, das heißt nach dem Einbau derselben in die Rohre entsprechend der Längsrichtung der Rohre durch den Stopfen gehen, sie können aber auch schräg verlaufen, wobei insbesondere benachbarte Bohrungen gleichsinnig oder gegenläufig versetzt ausgebildet sein können. Durch derartige Anordnungen kann das Strömungsverhalten der Polymerlösung beeinflusst werden.

Die Bohrungen können zylindrisch, konisch oder mit gestuftem Durchmesser ausgeführt sein, oder auch als Schlitze, Dreiecke oder sternförmig, wobei die letzteren Ausführungsformen insbesondere durch Erodieren erreicht werden können.

In einer weiteren Ausführungsform sind die Bohrungen nicht durchgängig durch den Stopfen ausgebildet, sondern münden in einer oder mehreren rechtwinklig oder in einem von 90° abweichenden Winkel zu den in Längsrichtung orientierten Hauptbohrungen angelegten Querbohrungen, wobei die Querbohrungen denselben oder einen von der Hauptbohrung verschiedenen Durchmesser haben können. Bevorzugt ist die Summe der freien Durchtrittsquerschnitte aller Querbohrungen größer als der freie Durchtrittsquerschnitt der in Längsrichtung angeordneten Hauptbohrung oder Hauptbohrungen, so dass in der Hauptbohrung bzw. in den Hauptbohrungen der größte Drucksprung stattfindet. Gleichzeitig wird durch die Querbohrungen die Polymerlösung besser an die Rohrinnenwände verteilt. Bevorzugt sind T-Kanal-, Kreuzkanal- oder Sternkanalbohrungen. Die Form dieser Bohrungen muss nicht rund sein, sondern kann in ihrer Ausgestaltung auch trichterförmig sein oder die Form von Zylindersegmenten mit gestuftem Durchmesser aufweisen.

In einer bevorzugten Ausführungsform weist der Einbau eine Kreuzkanalbohrung auf, mit einer Zentralbohrung, die in eine kreuzförmige Querbohrung mündet.

Die kreuzförmige Querbohrung weist bevorzugt einen Durchmesser zwischen 2 und 5 mm, insbesondere einen Innendurchmesser von 4 mm auf.

Länge und Durchmesser der einen oder mehreren Bohrungen sowie die Mündungsgeometrie richten sich nach der konkreten Entgasungsaufgabe, das heißt insbesondere der chemischen Zusammensetzung und der Viskosität der zu entgasenden Polymerlösung, Eingangstemperatur, dem Eingangsdruck und dem Durchsatz durch den Rohrbündelwärmeübertrager sowie den vorgegebenen Restgehalten an gelösten Stoffen im entgasten Polymer.

Typische Durchmesser liegen, sofern eine einzige Bohrung vorgesehen ist, zwischen 0,5 und 7 mm, bevorzugt zwischen 1 und 6 mm, weiter bevorzugt zwischen 1, 5 und 5 mm. Sofern eine einzelne Bohrung, insbesondere eine Zentralbohrung, vorgesehen ist, ist diese insbesondere zwischen 0,5 und 10 cm, bevorzugt zwischen 1 und 10 cm, weiter bevorzugt zwischen 1 und 6 cm, lang. Sie kann direkt oder unter Querschnittserweiterung enden, das heißt in das Rohr münden.

Die zu entgasende Polymerlösung kommt üblicherweise direkt aus dem Polymerisationsreaktor, beispielsweise einem kontinuierlich betriebenen Rührkessel, einer Rührkesselkaskade oder einem Rohrreaktor und steht unter dem Druck und der Temperatur, die weitgehend den Polymerisationsbedingungen entsprechen. Es ist aber auch möglich, durch druckaufbauende Aggregate, beispielsweise Schmelzepumpen, Extruder usw. und gegebenenfalls Wärmetauscher das Druck- und Temperaturniveau gegenüber den Polymerisationsbedingungen anzuheben.

Üblich sind insbesondere Eingangstemperaturen zwischen 100 und 300°C, bevorzugt zwischen 120 und 250°C, weiter bevorzugt zwischen 130 und 200°C und Eingangsdrücke im Bereich zwischen 5 und 80 bar absolut, bevorzugt zwischen 8 und 60 bar absolut, weiter bevorzugt zwischen 10 und 40 bar absolut.

Die Polymerlösung, die dem Rohrbündelwärmeübertrager zwecks Entgasung zugeführt wird, hat üblicherweise einen Polymergehalt zwischen 50 und 95 Gew.-% der Polymerlösung, bevorzugt zwischen 45 und 90 Gew.-% und weiter bevorzugt zwischen 60 und 85 Gew.-%.

Übliche Durchsätze für die Polymerlösung sind zwischen 0,5 und 30 kg Polymerlösung pro Stunde und Rohr, bevorzugt zwischen 1 und 25 kg Polymerlösung pro Stunde und Rohr, weiter bevorzugt zwischen 2 und 20 kg Polymerlösung pro Stunde und Rohr.

Zur Verteilung der Polymerlösung auf die einzelnen Rohre des Rohrbündelwärmeübertragers können zusätzlich im Bereich des oberen Rohrbodens Düsen oder Lochblenden vorgesehen sein.

Die Länge der Rohre des Rohrbündelwärmeübertragers liegt üblicherweise im Bereich zwischen 0,3 und 10 m, bevorzugt zwischen 0,5 und 6 m, weiter bevorzugt zwischen 1,0 und 3 m. Die Rohre weisen bevorzugt Innendurchmesser zwischen 5 und 30 mm, bevorzugt zwischen 8 und 25 mm, weiter bevorzugt zwischen 10 und 18 mm auf.

Die Rohre des Rohrbündelwärmeübertragers werden durch einen durch den Mantelraum um die Rohre strömenden flüssigen oder gasförmigen Wärmeträger beheizt. Hierbei ist es möglich, dass ein einziger Wärmeträgerkreislauf vorgesehen ist, es ist jedoch auch möglich, insbesondere bei Beheizung mit einem flüssigen Wärmeträger, mehrere Wärmeträgerkreisläufe vorzusehen, um einzelne, unterschiedlich temperierte Zonen zu gewährleisten. Dies kann insbesondere erforderlich sein, um unterschiedliche Komponenten, mit jeweils unterschiedlichen Entgasungseigenschaften, zu entfernen.

Als gasförmige Wärmeträger sind beispielsweise Heißdampf oder Diphyldampf möglich.

Abgestufte Temperaturen, beispielsweise einen kälteren Eingangsbereich, kann man in einem dampfbeheizten Apparat durch Einbringen eines Inertgaspolsters in den Dampfraum erreichen.

Übliche Wärmeträgertemperaturen liegen im Bereich von 100 bis 380°C, bevorzugt von 120 bis 350°C, weiter bevorzugt von 130 bis 340°C.

Das untere Ende der Rohre des Rohrbündelwärmeübertragers mündet in einen Entgasungsbereich, an den ein Vakuum angelegt ist, häufig im Bereich von 5 bis 100 mbar, bevorzugt von 12 bis 70 mbar, weiter bevorzugt von 20 bis 50 mbar.

Wenn die Polymerlösung beim Eintritt in den Rohrbündelwärmeübertrager die für die Verdampfung zwecks Erreichung der vorgegebenen Restgehalte an gelösten Stoffen notwendige Energie noch nicht enthält oder insbesondere vor Eintritt in den Rohrbündelwärmeübertrager nicht eingebracht werde kann, und die begrenzte thermische Stabilität derselben dieses nicht gestattet, wird erfindungsgemäß zur Erreichung der vorgegebenen niedrigen Restgehalte an gelösten Stoffen im entgasten Polymer der Einbau in jedem Rohr zusätzlich in der Weise ausgebildet, dass sie nicht nur den oben beschriebenen Drucksprung, sondern darüber hinaus in einem ersten oberen Teil eine lediglich moderate Querschnittsverengung bewirkt, die je nach eingesetzter Polymerlösung und Betriebsbedingungen sicherstellt, dass die Polymerlösung noch in einphasigem flüssigem Zustand verbleibt. In diesem oberen Teil des Einbaus soll durch die moderate Querschnittsverengung der Druckabfall nicht größer als 0,3 bar/cm, insbesondere nicht größer als 0,1 bar/cm sein, die Verengung soll jedoch, insbesondere bezogen auf den Rohrinnendurchmesser, ausreichend sein, um eine gleichmäßige Temperaturverteilung in der Polymerlösung über den Strömungsquerschnitt zu gewährleisten.

Dieser obere Teil des Einbaus kann insbesondere in Form eines Stabes ausgebildet sein, der sich vom oberen Ende des Rohres bis auf maximal 20 % der Gesamtlänge des Rohres, bevorzugt bis auf maximal 15 % der Gesamtlänge des Rohres erstreckt.

Indem durch diesen oberen Teil des Einbaus im oberen Teil des Rohres eine Einphasigkeit der Polymerlösung gewährleistet wird, und gleichzeitig der freie Querschnitt ausreichend eingehalten wird, um eine gleichmäßige Temperaturverteilung über den Querschnitt sicherzustellen, ist es möglich, thermisch empfindliche Polymerlösungen gleichmäßig und schonend, ohne Fouling, auf ein Temperaturniveau aufzuheizen, das es durch Differenz zum Druck im Entgasungsbereich ermöglicht, vorgegebene niedrige Restgehalte an gelösten Stoffen im entgasten Polymer zur erreichen.

In der oben beschriebenen bevorzugten Ausführungsform schließt sich an den oberen Teil des Einbaus eine weiterer Teil des Einbaus an, der einen starken Drucksprung, von mindestens 10 bar/cm, bevorzugt von mindestens 20 bar/cm, über eine Länge von maximal 2 cm bewirkt.

Bevorzugt weist der weitere Teil des Einbaus, der einen Drucksprung von mindestens 10 bar/cm, bevorzugt von mindestens 20 bar/cm bewirkt, eine Länge von weniger als 10 mm, insbesondere von weniger als 2 mm, auf.

In einer weiteren bevorzugten Ausführungsform kann sich an den weiteren Teil des Einbaus, der den Drucksprung bewirkt, ein zusätzlicher Verdrängerkörper anschließen, der wiederum einen lediglich moderaten Druckabfall bewirkt. Dieser Verdrängerkörper, der beispielsweise ein insbesondere unten geschlossener Zylinder sein kann, soll in der Weise ausgebildet sein, dass er eine überwiegende Ringströmung im zweiphasigen Strömungsbereich nach dem weiteren Teil des Einbaus, der den Drucksprung bewirkt, und damit ein für den Wärmeeintrag förderliches Strömungsprofil aufzwingt. Der Verdrängerkörper kann sich bis kurz vor Rohrende, beispielsweise bis etwa 80 % der Rohrlänge, erstrecken.

Die Einbauten können am oberen Rohrboden durch ausgefräste Passungen und Schraubgewinde fixiert sein. Wenn die Rohrböden ausreichende Materialstärken aufweisen, wie dies der Fall bei Rohrbündelwärmeübertragern in großtechnischem Maßstab ist, können die Einbauten auch durch Ausfräsungen in den oberen Rohrboden versenkt und durch Gewinde fixiert werden. Auch ist oft eine Fixierung ohne Gewinde einfach durch eine passgenaue Ausfräsung und eine hierzu passende Form der Einbauten ausreichend.

Zu besonderen Ausführungsformen, insbesondere bei längeren Einbauten, ist zur Vermeidung von Wandgängigkeit die Verwendung von punkt- oder paddelförmigen Abstandhaltern möglich, die die Einbauten in der Rohrmitte fixieren.

In einer weiteren bevorzugten Ausführungsform, insbesondere bei Verwendung längerer Einbauten, können dieselben zwischen einem im Rohrboden einliegenden Teil und dem am Ende eines längeren Stapels angeordneten weiteren Teil, der den Drucksprung bewirkt, mittels eines Gelenkes flexibel gelagert sein. Dieses Gelenk kann in jeder bekannten Weise gestaltet sein, beispielsweise mittels Zapfen und Gabel, durch die ein Fixierungsstift gesteckt wird.

Die Erfindung wird im Folgenden anhand einer Figur sowie von Ausführungsbeispielen näher erläutert.

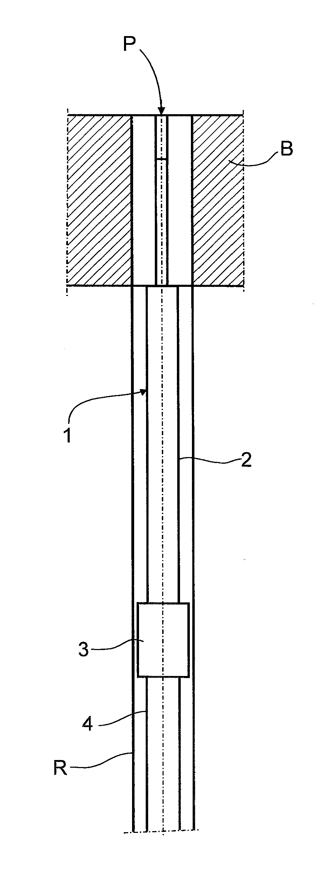

Die einzige Figur 1 zeigt schematisch eine bevorzugte Ausführungsvariante eines erfindungsgemäßen Einbaus für ein Rohr eines Rohrbündelwärmeübertragers.

Der Einbau 1 weist einen im Rohrboden liegenden Teil auf, der in der Weise ausgestaltet ist, dass er einen möglichst kleinen Druckverlust bewirkt. Die Polymerlösung T wird von oben in das Rohr eingeleitet. An den im Rohrboden B liegenden Teil des Einbaus 1 schließt sich ein oberer Teil 2 in Form eines Stabes an, der einen moderaten Druckverlust von maximal 0,1 bar/cm bewirkt und eine einphasige Strömung der Polymerlösung gewährleistet. Daran schließt sich ein weiterer Teil 3 des Einbaus 1 an, der im Vergleich zum oberen Teil 2 des Einbaus kurz ist und der einen drastischen Drucksprung bewirkt. Daran schließt sich in der in der Figur skizzierten bevorzugten Ausführungsform ein Verdrängerkörper 4 an, der wiederum einen moderaten Druckabfall bewirkt und ein vorteilhaftes Strömungsprofil für das zweiphasige, durch das Rohr strömende Gemisch, aufzwingt.

### Ausführungsbeispiele

Die Erfindung wird im Folgenden anhand von Ausführungsbeispielen näher erläutert:
Die Versuche wurden in einer Laborapparatur, bestehend aus einem vertikal stehenden Doppelmantelrohr durchgeführt, das in mehrere unterschiedlich temperierte Zonen aufgeteilt war. Am oberen Ende des Doppelmantelrohres war eine Aussparung zur Aufnahme von Einbauten vorgesehen; beispielsweise können hier Stopfen mit unterschiedlichen Geometrien eingeschraubt oder eingesteckt werden.

Für den Vergleichsversuch diente an Stelle eines Stopfens eine in eine Halterung eingepasste Scheibe mit einer lichten Weite von 8 mm.

Das Doppelmantelrohr hatte eine Gesamtlänge von 1.400 mm und war in drei unterschiedlich temperierte Zonen aufgeteilt, die jeweils mit einem eigenen, mit Marlotherm® S flüssig beheizten Temperierkreis versehen waren. Der temperierbare Bereich reichte von Raumtemperatur bis 330°C.

Dem oberen Ende des Doppelmantelrohres konnte mittels einer Zahnradpumpe über eine beheizte Leitung die jeweilige Polymerlösung mit einem Durchsatz zwischen 1,0 bis 30 kg Lösung/h zugeführt werden.

Am unteren Ende des Doppelmantelrohres war ein Verdampfertopf angebracht, der bei einem Vakuum von 100 bis 20 mbar, bevorzugt von 70 bis 25 mbar, betrieben werden konnte. Die aus dem Verdampfertopf abgezogenen Brüden wurden kondensiert.

Die weitgehend entgaste Schmelze wurde am Boden des Verdampfertopfes mittels einer Zahnradpumpe über eine Düse ausgetragen, abgekühlt und als Strang granuliert. Für das so gewonnene Granulat wurden die darin verbliebenen Restgehalte an Monomeren und Lösungsmittel bestimmt.

### Vergleichsbeispiel

Am oberen Ende des Doppelmantelrohres wurde eine Scheibe mit einer Bohrung von 8 mm Durchmesser eingelegt.

Mittels der Zahnradpumpe wurden 12,9 kg/h einer Lösung von 70 Gew.-% Polystyrol und 30 Gew.-% einer Mischung aus Styrol und Ethylbenzol bei einer Temperatur von 130°C zugeführt. Der Druck direkt vor der Scheibe betrug 3 bar, das Vakuum im Verdampfertopf 25 mbar absolut.

Der Druck nach dem ersten Rohrsegment betrug 1 bar und somit der Druckabfall zwischen dem Eintritt der Polymerlösung in die Apparatur und dem Druck nach der Scheibe 1 bar. Bei einer Dicke der Scheibe von 10 mm betrug daher der Druckabfall 2 bar/cm.

Alle drei Segmente des Doppelmantelrohres waren von außen jeweils auf 314°C beheizt, der Entgasertopf war mit 250°C beheizt. Die Schmelzetemperatur beim Eintritt in den Entgasertopf betrug 232°C.

Der Gehalt an flüchtigen Substanzen wurde zu 940 ppm bestimmt.

### Beispiel 1 (erfindungsgemäß)

Am oberen Ende des Doppelmantelrohres wurde ein Stopfen mit Zentralbohrung 1,8 mm Durchmesser, der Bohrungslänge 25 mm, eingelegt. Die zum Vergleichsbeispiel beschriebene Lösung wurde bei einer Temperatur von 136°C durch den Stopfen unter einem Eingangsdruck von 34 bar in das Doppelmantelrohr gepumpt. Der Stopfen bewirkte somit einen Drucksprung von 12,8 bar/cm.

Der Druck nach dem ersten Rohrsegment betrug ca. 2 bar absolut. Das Vakuum im Verdampfertopf betrug 25 mbar absolut.

Alle drei Rohrsegmente waren von außen auf 314°C beheizt, der Entgasertopf war mit 250°C beheizt. Die Schmelzetemperatur bei Eintritt in den Entgasertopf betrug 246°C.

Der Gehalt an flüchtigen Substanzen wurde auf 440 ppm bestimmt.

### Beispiel 2 (erfindungsgemäß)

Der unter Beispiel 1 beschriebene Versuch wurde wiederholt, jedoch mit einem Stopfen anderer Geometrie: Dieser Stopfen wies eine Geometrie gemäß der Figur ohne Verdrängungskörper 4 auf, wobei die Gesamtlänge 30 cm betrug. Der den Drucksprung bestimmende Teil 3 hatte eine Länge von 3 cm, der Abstand desselben zur Rohrwand betrug 0,8 mm. Der Durchsatz und die Zusammensetzung der zu entgasenden Lösung waren dieselben wie unter Beispiel 1 beschrieben, die Eintrittstemperatur unterschied sich geringfügig und betrug 133°C. Der Eingangsdruck betrug ca. 44 bar, der Druck nach dem ersten Rohrsegment, analog zu Beispiel 1, 2 bar. Der Druckabfall über den Stopfen entsprach somit 14 bar/cm. Das Vakuum im Verdampfertopf war mit 25 mbar absolut gleich wie in Beispiel 1, die Beheizung der drei Rohrsegmente war geringfügig verschieden und zwar auf 313°C, der Entgasertopf war ebenfalls auf 250°C beheizt. Die Schmelztemperatur bei Eintritt in den Entgasertopf betrug 243°C.

Der Gehalt an flüchtigen Substanzen der Polymerschmelze (im Wesentlichen Ethylbenzol, daneben insbesondere Styrol) wurde auf 550 ppm bestimmt.

## Patentansprüche

1. Verfahren zur Entfernung von gelösten Stoffen aus einer Polymerlösung (P) mit einem Polymergehalt zwischen 50 und 95 Gew.% der Polymerlösung, die direkt aus einem Polymerisationsreaktor kommt, durch Entgasung in einem Rohrbündelwärmeübertrager (R), mit einem Bündel 5 von parallel zueinander und vertikal angeordneten Rohren (R), die an beiden Enden jeweils in einem Rohrboden (B) befestigt sind sowie mit einem Entgasungsbereich unterhalb des unteren Rohrbodens (B), mit einem Einbau (1) in jedem Rohr (R), der den freien Durchtrittsquerschnitt durch das Rohr (R) verengt und wobei in die Rohre (R) die Polymerlösung (P) in einphasigem flüssigem Zustand 10 zugeführt wird, sowie mit einem Mantelraum um die Rohre (R), der von einemWärmeträger durchströmt wird, wobei die Entgasung durch einen Druckabfall zwischen dem Eingangsdruck der Polymerlösung (P) in dem Rohrbündelwärmeübertrager (R) und dem Entgasungsbereich erfolgt, **dadurch gekennzeichnet, dass** jeder Einbau (1) dergestalt ausgebildet ist, dass er einen Drucksprung 15 zwischen dem Eingangsdruck und dem Druck im Entgasungsbereich erzeugt, durch den ein vorgegebener niedriger Restgehalt an gelöste n Stoffen im entgasten Polymer erreicht wird, wobei die Einbauten (1) im Bereich des oberen Rohrbodens (B) angeordnet sind, in Form von Stopfen ausgebildet und am oberen Rohrboden durch ausgefräste Passungen und Schraubgewinde oder durch 20 passgenaue Ausfräsung ohne Gewinde fixiert sind, wobei die Stopfen die Rohre (R) bis auf eine Zentralbohrung für den Durchtritt der Polymerlösung (P) verschließen und wobei die Einbauten (1) den freien Durchtrittsquerschnitt durch die Rohre (R) auf weniger als 5% verengen.

2. Verfahren nach Anspruch 1, **dadurch gekennzeichnet, dass** der Einbau (1) dergestalt ausgebildet ist, dass er zusätzlich gewährleistet, dass der Wärmeeintrag seitens des Wärmeträgers in die einphasige flüssige Polymerlösung (P) erfolgt.

3. Verfahren nach Anspruch 1 oder 2, **dadurch gekennzeichnet, dass** die Einbauten 30 (1) den freien Durchtrittsquerschnitt durch die Rohre (R) auf weniger als 2%, verengen.

4. Verfahren nach Anspruch 1, **dadurch gekennzeichnet, dass** die Zentralbohrung 35 im Einbau (1) einen Durchmesser zwischen 1,5 und 2,5 mm aufweist.

5. Verfahren nach Anspruch 1, **dadurch gekennzeichnet, dass** die Zentralbohrung in einer kreuzförmigen Querbohrung mündet

6. Verfahren nach Anspruch 1, **dadurch gekennzeichnet, dass** die kreuzförmige Querbohrung einen Innendurchmesser zwischen 2 und 5 mm aufweist.

7. Verfahren nach einem der Ansprüche 1 bis 6, **dadurch gekennzeichnet, dass** die Rohre (R) eine Länge von 0,3 bis 10,0 m und einen Innendurchmesser zwischen 5 und 30 mm aufweisen.

8. Verfahren nach einem der Ansprüche 2 bis 7, **dadurch gekennzeichnet, dass** der Einbau (1) einen oberen Teil in Form eines Stabes (2) aufweist, der sich vom oberen Ende des Rohres (R) bis auf maximal 20 % der Gesamtlänge des Rohres (R) erstreckt und an den sich ein weiterer Teil (3) des Einbaus (1) anschließt, der einen Drucksprung von mindestens 10 bar/cm über eine Länge von maximal 2 cm bewirkt.

9. Verfahren nach Anspruch 8, **dadurch gekennzeichnet, dass** sich der Stab auf maximal 15 % der Gesamtlänge des Rohres (R) erstreckt und der weitere Teil (3) des Einbaus, der einen Drucksprung bewirkt, eine Länge von weniger als 10 mm aufweist.

10. Verfahren nach Anspruch 8 oder 9, **dadurch gekennzeichnet, dass** sich an den weiteren Teil (3) des Einbaus (1) ein Verdrängungskörper (4) anschließt, der eine überwiegende Ringströmung der Polymerlösung (P) im Rohr (R) gewährleistet

## Claims

1. Method for removing dissolved substances from a polymer solution (P) having a polymer content of from 50 to 95% by weight of the polymer solution which comes directly from the polymerization reactor by degassing in a shell-and-tube heat exchanger (R) comprising a bundle of parallel vertical tubes (R) which are fixed at each end in a tube plate (B) and a degassing region below the lower tube plate (B), an internal fitting (1) in each tube (R) which reduces the free open cross section through the tube (R), with the polymer solution (P) being fed in a single-phase liquid state into the tubes (R), and an internal space within the shell around the tubes (R) through which a heat transfer medium flows, with degassing occurring as a result of a pressure drop between the entry pressure of the polymer solution (P) in the shell-and-tube heat exchanger (R) and the degassing region, **characterized in that** each internal fitting (1) is configured so that it produces a pressure step between the entry pressure and the pressure in the degassing region, by means of which a prescribed low residual content of dissolved substances in the degassed polymer is achieved, where the internal fittings (1) are located in the region of the upper tube plate (B), are configured in the form of plugs and are fixed to the upper tube plate by means of milled-out sockets and screw threads or without threads by means of an accurately fitting milled-out hole, where the plugs close the tubes (R) except for a central hole for passage of the polymer solution (P) and the internal fittings (1) reduce the free open cross section of the tubes (R) to less than 5%.

2. Method according to Claim 1, **characterized in that** the internal fitting (1) is configured so that it additionally ensures that the heat input from the heat transfer medium is into the single-phase liquid polymer solution (P).

3. Method according to Claim 1 or 2, **characterized in that** the internal fittings (1) reduce the free open cross section of the tubes (R) to less than 2%.

4. Method according to Claim 1, **characterized in that** the central hole in the internal fitting (1) has a diameter of from 1.5 to 2.5 mm.

5. Method according to Claim 1, **characterized in that** the central hole opens into a cross-shaped transverse hole.

6. Method according to Claim 1, **characterized in that** the cross-shaped transverse hole has an internal diameter of from 2 to 5 mm.

7. Method according to any of Claims 1 to 6, **characterized in that** the tubes (R) have a length of from 0.3 to 10.0 m and an internal diameter of from 5 to 30 mm.

8. Method according to any of Claims 2 to 7, **characterized in that** the upper part of the internal fitting (1) has the shape of a rod (2) which extends from the upper end of the tube (R) to not more than 20% of the total length of the tube (R) and is adjoined by a further part (3) of the internal fitting (1) which produces a pressure step of at least 10 bar/cm over a length of not more than 2 cm.

9. Method according to Claim 8, **characterized in that** the rod extends to not more than 15% of the total length of the tube (R) and the further part (3) of the internal fitting which produces a pressure step has a length of less than 10 mm.

10. Method according to Claim 8 or 9, **characterized in that** the further part (3) of the internal fitting (1) adjoins a displacement body (4) which ensures predominantly annular flow of the polymer solution (P) in the tube (R).

## Revendications

1. Procédé d'élimination de matériaux dissous d'une solution de polymère (P) ayant une teneur en polymère comprise entre 50 et 95 % en poids de la solution de polymère, qui provient directement d'un réacteur de polymérisation, par dégazage dans un échangeur de chaleur à faisceau de tubes (R), comprenant un faisceau de tubes agencés verticalement et en parallèle les uns aux autres (R), qui sont respectivement fixés aux deux extrémités dans une plaque tubulaire (B), ainsi qu'une zone de dégazage sous la plaque tubulaire (B) inférieure, comprenant un composant intérieur (1) dans chaque tube (R) qui rétrécit la section de passage libre dans le tube (R), la solution de polymère (P) étant introduite dans les tubes (R) à un état liquide monophasé, et comprenant un espace d'enveloppe autour des tubes (R), qui est traversé par un caloporteur, le dégazage ayant lieu par une chute de pression entre la pression d'entrée de la solution de polymère (P) dans l'échangeur de chaleur à faisceau de tubes (R) et la zone de dégazage, **caractérisé en ce que** chaque composant interne (1) est configuré de manière à générer un gradient de pression entre la pression d'entrée et la pression dans la zone de dégazage, grâce à laquelle une teneur résiduelle faible prédéterminée en matériaux dissous dans le polymère dégazé est obtenue, les composants internes (1) étant agencés dans la zone de la plaque tubulaire (B) supérieure, étant configurés sous la forme de bouchons et étant fixés à la plaque tubulaire supérieure par des ajustages fraisés et des filets de vis ou par une fraisure sur mesure sans filet, les bouchons fermant les tubes (R) à l'exception d'un alésage central pour le passage de la solution de polymère (P) et les composants internes (1) rétrécissant la section de passage libre dans les tubes (R) à moins de 5 %.

2. Procédé selon la revendication 1, **caractérisé en ce que** le composant interne (1) est configuré de manière à assurer en outre que l'apport de chaleur de la part du caloporteur dans la solution de polymère liquide monophasée (P) ait lieu.

3. Procédé selon la revendication 1 ou 2, **caractérisé en ce que** les composants internes (1) rétrécissent la section de passage libre dans les tubes (R) à moins de 2 %.

4. Procédé selon la revendication 1, **caractérisé en ce que** l'alésage central dans le composant interne (1) présente un diamètre compris entre 1,5 et 2,5 mm.

5. Procédé selon la revendication 1, **caractérisé en ce que** l'alésage central débouche dans un alésage latéral en croix.

6. Procédé selon la revendication 1, **caractérisé en ce que** l'alésage latéral en croix présente un diamètre intérieur compris entre 2 et 5 mm.

7. Procédé selon l'une quelconque des revendications 1 à 6, **caractérisé en ce que** les tubes (R) présentent une longueur de 0,3 à 10,0 m et un diamètre intérieur compris entre 5 et 30 mm.

8. Procédé selon l'une quelconque des revendications 2 à 7, **caractérisé en ce que** le composant intérieur (1) comprend une partie supérieure sous la forme d'une baguette (2), qui s'étend depuis l'extrémité supérieure du tube (R) sur au plus 20 % de la longueur totale du tube (R) et à laquelle est raccordée une autre partie (3) du composant interne (1), qui créée un gradient de pression d'au moins 10 bar/cm sur une longueur d'au plus 2 cm.

9. Procédé selon la revendication 8, **caractérisé en ce que** la baguette s'étend sur au plus 15 % de la longueur totale du tube (R) et l'autre partie (3) du composant intérieur, qui créée un gradient de pression, présente une longueur de moins de 10 mm.

10. Procédé selon la revendication 8 ou 9, **caractérisé en ce qu'**un corps de refoulement (4), qui assure un écoulement essentiellement annulaire de la solution de polymère (P) dans le tube (R), est raccordé à l'autre partie (3) du composant intérieur (1).
